# EUROPEAN PATENT SPECIFICATION

(11) **EP 4 134 557 B1**
(45) Date of publication and mention of the grant of the patent: **29.11.2023**
(21) Application number: 21191118.5
(22) Date of filing: 12.08.2021
(51) Int. Cl.: F16B 25/00

(54) **SCREW WITH MULTIPLE THREAD ANGLES**
SCHRAUBE MIT MEHREREN GEWINDEWINKELN
VIS À ANGLES DE FILETAGE MULTIPLES

(43) Date of publication of application: 15.02.2023
(73) Proprietor: Taiwan Shan Yin International Co., Ltd., Kaohsiung City 820 (TW)
(72) Inventor: Su, Kou-Tsair, 806 Kaohsiung City (TW); Su, Chen-Long, 800 Kaohsiung City (TW)
(74) Representative: Cabinet Chaillot

(56) References cited:
- DE-A1- 4 206 884
- JP-A- H09 291 918
- US-A1- 2009 245 972

## Description

### BACKGROUND OF THE INVENTION

### 1. Field of the Invention

This invention relates to a screw and relates particularly to a screw with multiple thread angles.

### 2. Description of the Related Art

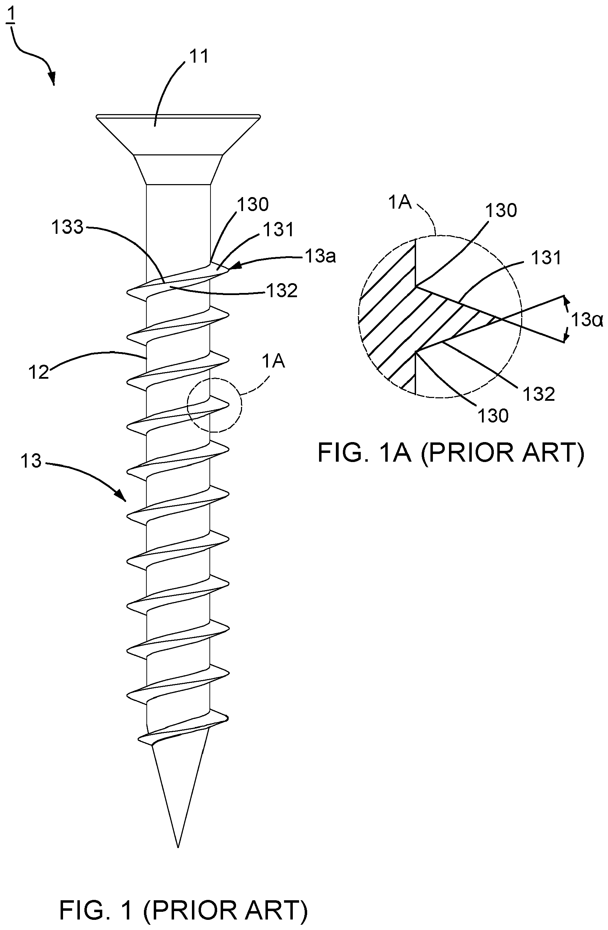

Referring to Fig. **1** and Fig. **1A****,** a conventional screw **1** comprises a head **11,** a shank **12** extending outwards from the head **11,** and a threaded portion **13** spirally disposed on the shank **12.** The threaded portion **13** has a plurality of thread convolutions **13a** spirally formed on the shank **12.** Each thread convolution **13a** has a root **130** connected to the shank **12,** an upper thread flank **131** extending outwards from the root **130,** a lower thread flank **132** extending outwards from the root **130** and connected to the upper thread flank **131,** and a thread crest **133** formed along a junction of the upper thread flank **131** and the lower thread flank **132.** During a screwing operation, the head **11** receives a rotational force in order that the thread convolutions **13a** cut into a workpiece (not shown) and synchronously screws the shank **12** into the workpiece gradually whereby the screwing operation is completed.

However, the thread convolutions **13a** share an equal thread angle **13α** defined between the upper thread flank **131** and the lower thread flank **132.** When the thread angle **13α** is adjusted to be large, the sharpness of the thread convolutions **13a** is reduced, namely the thread convolutions **13a** are unable to cut the workpiece sharply. Meanwhile, a contact area between each thread convolution **13a** and the workpiece is increased, and that will increase the friction caused when the thread convolutions **13a** cut into the workpiece. Cut chips generated during the screwing operation will accumulate easily and cannot be excluded outwards smoothly, and that will increase the screwing resistance and the screwing torque. Thus, larger rotational force should be adapted to screw the screw **1** into the workpiece during the screwing operation. The screwing speed is also reduced. Further, the accumulated cut chips may entangle around the shank **12** to cause that the screwing resistance is increased. The accumulated cut chips will press each other to also enlarge the screwing resistance, and that requires to be improved.

When the thread angle **13α** is adjusted to be small, the sharpness of the thread convolutions **13a** is increased, but the thread convolutions **13a** cannot provide enough support for engaging with workpiece. Thus, the screw **1** cannot be engaged with the workpiece tightly after screwing into the workpiece. A screwing positioning effect is poor, and that requires to be improved.

JPH09291918A discloses a tapping screw that an easy screw thread diameter can be secured with respect to a shaft diameter, and a base material of relatively fragile quality such as ALC or the like is hard to be broken.

DE4206884A1 discloses a thread-tapping screw for plastics, soft metals etc. that has thread flanks bent down divergingly from bending point diameter to the thread base.

US2009/245972A1 discloses a fastener with multiple threaded sections that has a triangular shank with multiple threaded sections essentially including a head, a shank and a drilling portion.

In particular, JPH09291918A discloses a tapping screw according to the preamble of claim 1.

### SUMMARY OF THE INVENTION

The object of this invention is to provide a screw with multiple thread angles capable of reducing screwing resistance, excluding cut chips smoothly, and achieving a quick screwing effect.

The screw with multiple thread angles of this invention is as defined in claim 1 and comprises a head, a shank extending outwards from the head, and a main threaded portion spirally formed on the shank. The main threaded portion has a plurality of thread convolutions spirally disposed on the shank. Each thread convolution has a root connected to the shank, an upper thread flank extending outwards from the root, a lower thread flank extending outwards from the root and connected to the upper thread flank, a thread crest formed along a junction of the upper thread flank and the lower thread flank, opposite first upper and lower flank sections extending from the root and respectively defined on the upper thread flank and the lower thread flank, opposite second upper and lower flank sections extending from the first upper and lower flank sections respectively, and opposite third upper and lower flank sections extending from the second upper and lower flank sections to the thread crest respectively. A first thread angle is defined between the first upper flank section and the first lower flank section and ranges from 70 degrees to 75 degrees. A second thread angle is defined between the second upper flank section and the second lower flank section and ranges from 37 degrees to 43 degrees. A third thread angle is defined between the third upper flank section and the third lower flank section and ranges from 20 degrees to 23 degrees. A plurality of notches is recessed into the thread crest. Each notch has a chip-guiding surface cut into the thread crest, an upper cutting edge formed along a junction of the chip-guiding surface and the upper thread flank, and a lower cutting edge formed along a junction of the chip-guiding surface and the lower thread flank. Hence, the third thread angle assists each thread convolution in cutting a workpiece sharply to accelerate a cutting operation. The first and second thread angles help enlarge a cutting track caused by the cutting operation gradually so that the thread convolutions are continuously drilled into the workpiece by a multi-stage reaming and drilling operation to achieve a quick screwing effect. Thus, the friction caused when the screw screws into the workpiece is reduced. The thread convolutions are sharpened effectively. The screwing resistance is reduced. Further, the notches can help exclude cut chips smoothly to attain a smooth removal of the cut chips.

Preferably, the first upper and lower flank sections extend by a first length. The second upper and lower flank sections extend by a second length. The third upper and lower flank sections extend by a third length. The first length is equal to both of the second length and the third length.

Preferably, an auxiliary threaded portion is spirally disposed on the shank.

Preferably, a bottom of the chip-guiding surface is in contact with the second upper and lower flank sections.

### BRIEF DESCRIPTION OF THE DRAWINGS

Fig. **1** is a schematic view showing a conventional screw;
Fig. **1A** is an enlarged view of the encircled portion 1A indicated in Fig. 1;
Fig. **2** is a schematic view showing a first preferred embodiment of this invention;
Fig. **2A** is an enlarged view of the encircled portion 2A indicated in Fig. 2;
Fig. **3** is a cross-sectional view showing the thread convolution as seen along the line S-S of Fig. 2;
Fig. **4** is an enlarged view showing a partial element of Fig. 2; and
Fig. **5** is a schematic view showing a second preferred embodiment of this invention characterized by an auxiliary threaded portion.

### DETAILED DESCRIPTION OF THE PREFERRED EMBODIMENTS

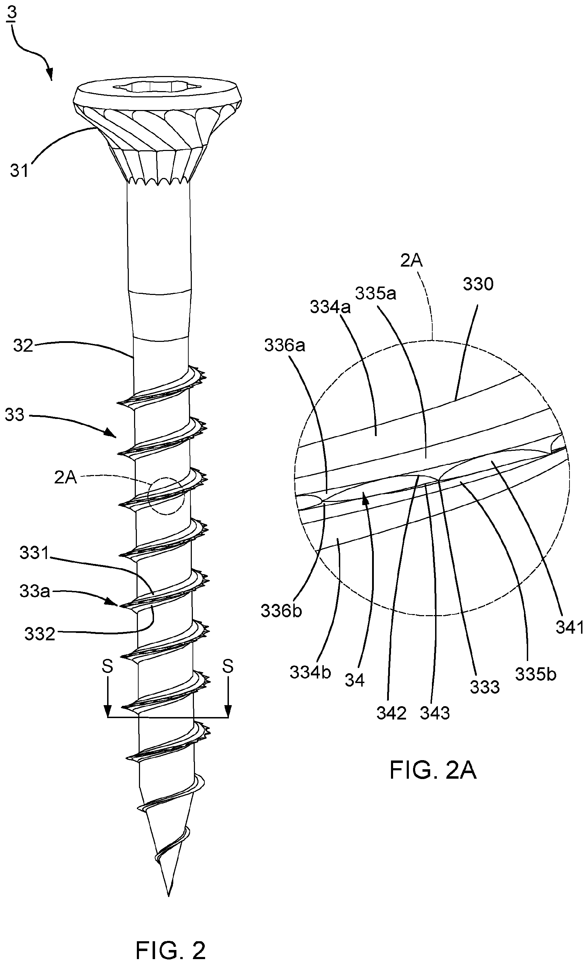

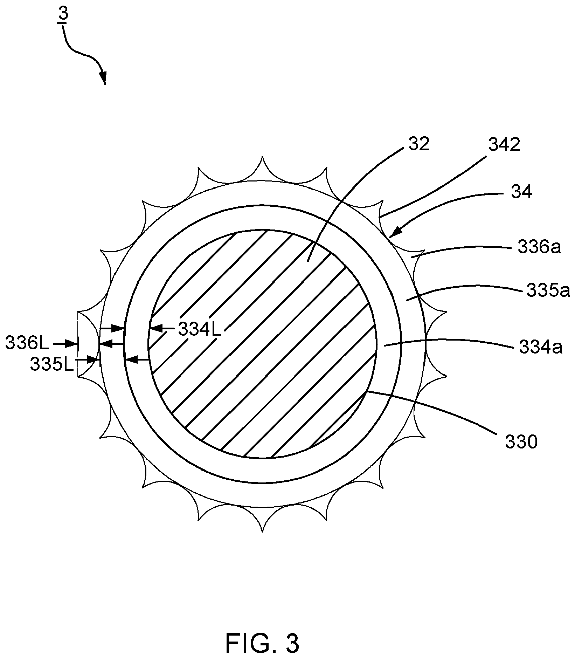

Referring to Figs. **2** and **2A****,** a first preferred embodiment of a screw **3** with multiple thread angles of this invention is disclosed. The screw **3** includes a head **31,** a shank **32** extending outwards from the head **31,** a main threaded portion **33** spirally disposed on the shank **32,** and a plurality of notches **34** formed on the main threaded portion **33.** The main threaded portion **33** has a plurality of thread convolutions **33a** spirally formed on the shank **32.** Each thread convolution **33a** has a root **330** connected to the shank **32,** an upper thread flank **331** extending outwards from the root **330,** a lower thread flank **332** extending outwards from the root **330** and connected to the upper thread flank **331,** a thread crest **333** formed along a junction of the upper thread flank **331** and the lower thread flank **332,** opposite first upper flank section **334a** and first lower flank section **334b** extending from the root **330** and respectively defined on the upper thread flank **331** and the lower thread flank **332,** opposite second upper flank section **335a** and second lower flank section **335b** extending from the first upper flank section **334a** and the first lower flank section **334b** respectively, and opposite third upper flank section **336a** and third lower flank section **336b** extending from the second upper flank section **335a** and the second lower flank section **335b** to the thread crest **333** respectively. Referring to Figs. **2A** and **3****,** in this preferred embodiment, the first upper flank section **334a** and the first lower flank section **334b** extend by a first length **334L.** The second upper flank section **335a** and the second lower flank section **335b** extend by a second length **335L.** The third upper flank section **336a** and the third lower flank section **336b** extend by a third length **336L.** The first length **334L** is equal to both of the second length **335L** and the third length **336L.**

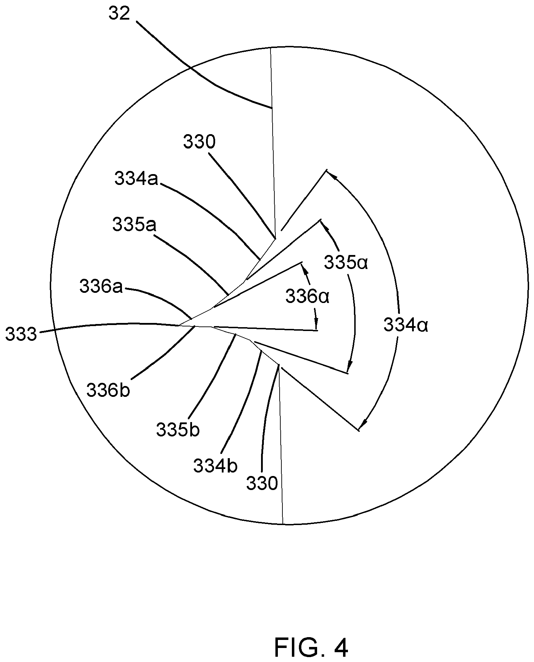

Referring to Fig. **4****,** a first thread angle **334α** is defined between the first upper flank section **334a** and the first lower flank section **334b** and ranges from 70 degrees to 75 degrees. A second thread angle **335α** is defined between the second upper flank section **335a** and the second lower flank section **335b** and ranges from 37 degrees to 43 degrees. A third thread angle **336α** is defined between the third upper flank section **336a** and the third lower flank section **336b** and ranges from 20 degrees to 23 degrees. Each notch **34** has a chip-guiding surface **341** recessed into the thread crest **333** to the third upper flank section **336a** and the third lower flank section **336b,** an upper cutting edge **342** formed along a junction of the chip-guiding surface **341** and the upper thread flank **331,** and a lower cutting edge **343** formed along a junction of the chip-guiding surface **341** and the lower thread flank **332.** In this preferred embodiment, a bottom of the chip-guiding surface **341** is in contact with the second upper flank section **335a** and the second lower flank section **335b** as shown in Fig. **3****.**

Referring to Figs. **2, 2A** and **4****,** a screwing operation of the screw **3** begins with positioning an end of the screw **3** against a surface of a workpiece (not shown). Then, the head **31** receives a rotational force in order to carry out a cutting operation of the thread convolutions **33a** and allow the screw **3** to enter into the workpiece gradually. Because the third thread angle **336α** ranging between 20 degrees and 23 degrees is smaller than the first thread angle **334α** and the second thread angle **335α,** it sharpens the thread crest **333** whereby the cutting performance of the screw **3** is improved and the cutting operation is accelerated. The thread convolutions **33a** can cut the workpiece sharply and quickly to further screw the shank **32** into the workpiece smoothly. Meanwhile, the notches **34** formed on the thread convolutions **33a** facilitate a smooth removal of cut chips. The cut chips generated during the cutting operation can be excluded outwards smoothly through the chip-guiding surface **341** of each notch **34** to thereby prevent the cut chips from being accumulated in the workpiece and prevent the screwing resistance from increasing caused by the accumulated cut chips. Simultaneously, the upper cutting edge **342** and the lower cutting edge **343** respectively formed along a junction of the chip-guiding surface **341** and the upper and lower thread flanks **331, 332** can also assist in cutting the workpiece to thereby break fibers of the cut chips effectively and prevent the shank **32** from being entangled by the fibers of the cut chips. Thus, the main threaded portion **33** can screw into the workpiece easily. Besides, the second thread angle **335α** ranging between 37 degrees and 43 degrees can support the first upper flank section **334a** and the first lower flank section **334b** duly and reduce a contact area between the thread convolutions **33a** and the workpiece to thereby reduce the screwing resistance and increase the screwing speed. Meanwhile, the first thread angle **334α** ranging between 70 degrees and 75 degrees assists in increasing the strength of the thread convolutions **33a** so that the thread convolutions **33a** can bear larger screwing force to further prevent the thread convolutions **33a** from being deformed or damaged during the screwing operation. The first thread angle **334α** also facilitates a tight engagement between the thread convolutions **33a** and the workpiece after the screw **3** screws into the workpiece to thereby attain the effect of stable screwing. Further, each thread convolution **33a** is narrowed gradually from the root **330** to the thread crest **333** in sequence to further define the first thread angle **334α,** the second thread angle **335α,** and the third thread angle **336α,** and that widens a cutting track caused by the cutting operation gradually so that the thread convolutions **33a** are continuously and smoothly drilled into the workpiece by a multi-stage reaming and drilling operation to achieve a quick screwing effect and reduce the screwing resistance. Hence, the arrangement of the third thread angle **336α,** the second thread angle **335α,** and the first thread angle **334α** sharpens each thread convolution **33a,** facilitates the quick cutting operation, reduces the screwing resistance, and attains the tight engagement between the thread convolutions **33a** and the workpiece. The notches **34** recessed into the thread crest **333** can assist in attaining a smooth removal of the cut chips.

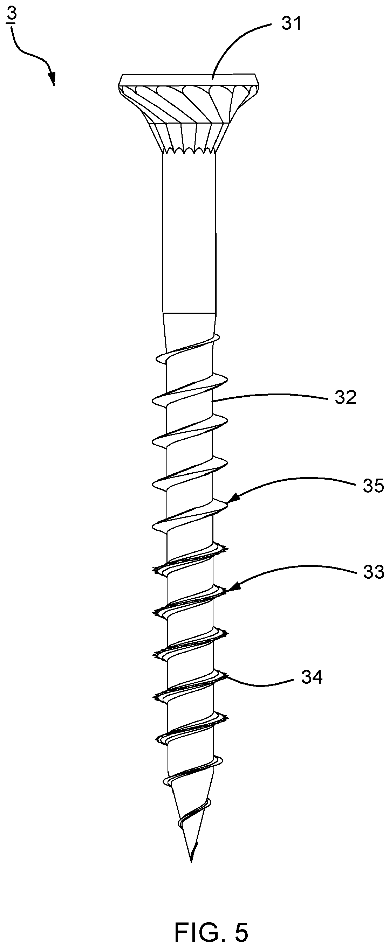

Referring to Fig. **5** shows a second preferred embodiment of the screw **3** of this invention. The correlated elements and the concatenation of elements, the operation and objectives of the second preferred embodiment are the same as those of the first preferred embodiment. This embodiment is characterized in that an auxiliary threaded portion **35** is spirally disposed on the shank **32.** Thus, the auxiliary threaded portion **35** can not only help cut the workpiece, but also enhance the tight engagement between the screw **3** and the workpiece after the screw **3** screws into the workpiece.

To sum up, the screw with multiple thread angles of this invention takes an advantage that each thread convolution defines different thread angles from the root to the thread crest in sequence, namely the first thread angle ranging between 70 degrees and 75 degrees, the second thread angle ranging between 37 degrees and 43 degrees, and the third thread angle ranging between 20 degrees and 23 degrees to increase the sharpness of the thread convolutions, facilitate the quick cutting operation, reduce the screwing resistance, and achieve the quick screwing effect. Further, the notches cut into the thread crest help exclude the cut chips outwards smoothly and quickly to thereby prevent the cut chips from being accumulated.

While the embodiments of this invention are shown and described, it is understood that further variations and modifications may be made without departing from the scope of this invention as defined in the appended claims.

## Claims

1. A screw (3) with multiple thread angles comprising:
a head (31);
a shank (32) extending outwards from said head (31); and
a main threaded portion (33) having a plurality of thread convolutions (33a) spirally disposed on said shank (32), wherein each of said plurality of thread convolutions (33a) of said main threaded portion (33) includes a root (330) connected to said shank (32), an upper thread flank (331) extending outwards from said root (330), a lower thread flank (332) extending outwards from said root (330) and connected to said upper thread flank (331), and a thread crest (333) formed along a junction of said upper thread flank (331) and said lower thread flank (332);
**characterized in that** each of said plurality of thread convolutions (33a) includes opposite first upper and lower flank sections (334a, 334b) extending from said root (330) and respectively defined on said upper thread flank (331) and said lower thread flank (332), opposite second upper and lower flank sections (335a, 335b) extending from said first upper and lower flank sections (334a, 334b) respectively, and opposite third upper and lower flank sections (336a, 336b) extending from said second upper and lower flank sections (335a, 335b) to said thread crest (333) respectively, a first thread angle (334α) being defined between said first upper flank section (334a) and said first lower flank section (334b) and ranging from 70 degrees to 75 degrees, a second thread angle (335α) being defined between said second upper flank section (335a) and said second lower flank section (335b) and ranging from 37 degrees to 43 degrees, a third thread angle (336α) being defined between said third upper flank section (336a) and said third lower flank section (336b) and ranging from 20 degrees to 23 degrees, a plurality of notches (34) being cut into said thread crest (333), each of said plurality of notches (34) including a chip-guiding surface (341) recessed into said thread crest (333), an upper cutting edge (342) formed along a junction of said chip-guiding surface (341) and said upper thread flank (331), and a lower cutting edge (343) formed along a junction of said chip-guiding surface (341) and said lower thread flank (332).

2. The screw (3) according to claim 1, wherein said first upper and lower flank sections (334a, 334b) extend by a first length (334L), said second upper and lower flank sections (335a, 335b) extending by a second length (335L), said third upper and lower flank sections (336a, 336b) extending by a third length (336L), said first length (334L) being equal to both of said second length (335L) and said third length (336L).

3. The screw (3) according to claim 1 or 2, wherein an auxiliary threaded portion (35) is spirally disposed on said shank (32).

4. The screw (3) according to any one of claims 1 to 3, wherein a bottom of said chip-guiding surface (341) is in contact with said second upper and lower flank sections (335a, 335b).

## Patentansprüche

1. - Schraube (3) mit mehreren Gewindewinkeln, umfassend:
einen Kopf (31);
einen Schaft (32), der sich von dem Kopf (31) nach außen erstreckt; und
einen Hauptgewindeabschnitt (33), der eine Vielzahl von Gewindewindungen (33a) aufweist, die spiralförmig auf dem Schaft (32) angeordnet sind, wobei jede der Vielzahl von Gewindewindungen (33a) des Hauptgewindeabschnitts (33) einen mit dem Schaft (32) verbundenen Fuß (330) aufweist, eine obere Gewindeflanke (331), die sich von dem Fuß (330) nach außen erstreckt, eine untere Gewindeflanke (332), die sich von dem Fuß (330) nach außen erstreckt und mit der oberen Gewindeflanke (331) verbunden ist, und einen Gewindekamm (333), der entlang einer Verbindung der oberen Gewindeflanke (331) und der unteren Gewindeflanke (332) gebildet ist;
**dadurch gekennzeichnet, dass** jede der Vielzahl von Gewindewindungen (33a) gegenüberliegende erste obere und untere Flankenabschnitte (334a, 334b) beinhaltet, die sich von dem Fuß (330) erstrecken und jeweils auf der oberen Gewindeflanke (331) und der unteren Gewindeflanke (332) definiert sind, gegenüberliegende zweite obere und untere Flankenabschnitte (335a, 335b), die sich jeweils von den ersten oberen und unteren Flankenabschnitten (334a, 334b) erstrecken, und gegenüberliegende dritte obere und untere Flankenabschnitte (336a, 336b), die sich jeweils von den zweiten oberen und unteren Flankenabschnitten (335a, 335b) zu dem Gewindekamm (333) erstrecken, einen ersten Gewindewinkel (334α), der zwischen dem ersten oberen Flankenabschnitt (334a) und dem ersten unteren Flankenabschnitt (334b) definiert ist und von 70 Grad bis 75 Grad reicht, einen zweiten Gewindewinkel (335α), der zwischen dem zweiten oberen Flankenabschnitt (335a) und dem zweiten unteren Flankenabschnitt (335b) definiert ist und von 37 Grad bis 43 Grad reicht, einen dritten Gewindewinkel (336α), der zwischen dem dritten oberen Flankenabschnitt (336a) und dem dritten unteren Flankenabschnitt (336b) definiert ist und von 20 Grad bis 23 Grad reicht, eine Vielzahl von Kerben (34), die in den Gewindekamm (333) geschnitten sind, wobei jede der Vielzahl von Kerben (34) eine in den Gewindekamm (333) eingelassene Spanführungsfläche (341), eine obere Schneidkante (342), die entlang einer Verbindung der Spanführungsfläche (341) und der oberen Gewindeflanke (331) gebildet ist, und eine untere Schneidkante (343), die entlang einer Verbindung der Spanführungsfläche (341) und der unteren Gewindeflanke (332) gebildet ist, beinhaltet.

2. - Schraube (3) nach Anspruch 1, wobei sich der erste obere und der erste untere Flankenabschnitt (334a, 334b) über eine erste Länge (334L) erstrecken, der zweite obere und der zweite untere Flankenabschnitt (335a, 335b) sich über eine zweite Länge (335L) erstrecken, der dritte obere und der dritte untere Flankenabschnitt (336a, 336b) sich über eine dritte Länge (336L) erstrecken, wobei die erste Länge (334L) sowohl der zweiten Länge (335L) als auch der dritten Länge (336L) entspricht.

3. - Schraube (3) nach Anspruch 1 oder 2, wobei ein Hilfsgewindeabschnitt (35) spiralförmig auf dem Schaft (32) angeordnet ist.

4. - Schraube (3) nach einem der Ansprüche 1 bis 3, wobei ein Boden der Spanleitfläche (341) mit dem zweiten oberen und dem zweiten unteren Flankenabschnitt (335a, 335b) in Kontakt ist.

## Revendications

1. - Vis (3) à angles de filet multiples comprenant :
une tête (31) ;
une tige (32) s'étendant vers l'extérieur à partir de ladite tête (31) ; et
une partie filetée principale (33) ayant une pluralité de circonvolutions de filet (33a) disposées en spirale sur ladite tige (32), chacune de ladite pluralité de circonvolutions de filet (33a) de ladite partie filetée principale (33) comprenant une base (330) reliée à ladite tige (32), un flanc de filet supérieur (331) s'étendant vers l'extérieur à partir de ladite base (330), un flanc de filet inférieur (332) s'étendant vers l'extérieur à partir de ladite base (330) et relié audit flanc de filet supérieur (331), et un sommet de filet (333) formé le long d'une jonction dudit flanc de filet supérieur (331) et dudit flanc de filet inférieur (332) ;
**caractérisée par le fait que** chacune de ladite pluralité de circonvolutions de filet (33a) comprend des premières sections de flanc supérieure et inférieure opposées (334a, 334b) s'étendant à partir de ladite base (330) et respectivement définies sur ledit flanc de filet supérieur (331) et ledit flanc de filet inférieur (332), des deuxièmes sections de flanc supérieure et inférieure opposées (335a, 335b) s'étendant à partir desdites premières sections de flanc supérieure et inférieure (334a, 334b), respectivement, et des troisièmes sections de flanc supérieure et inférieure opposées (336a, 336b) s'étendant à partir desdites deuxièmes sections de flanc supérieure et inférieure (335a, 335b) jusqu'audit sommet de filet (333), respectivement, un premier angle de filet (334α) étant défini entre ladite première section de flanc supérieure (334α) et ladite première section de flanc inférieure (334b) et situé dans la plage allant de 70 degrés à 75 degrés, un deuxième angle de filet (335α) étant défini entre ladite deuxième section de flanc supérieure (335a) et ladite deuxième section de flanc inférieure (335b) et situé dans la plage allant de 37 degrés à 43 degrés, un troisième angle de filet (336α) étant défini entre ladite troisième section de flanc supérieure (336a) et ladite troisième section de flanc inférieure (336b) et situé dans la plage allant de 20 degrés à 23 degrés, une pluralité d'encoches (34) étant découpées dans ledit sommet de filet (333), chacune de ladite pluralité d'encoches (34) comprenant une surface de guidage de copeaux (341) en renfoncement dans ledit sommet de filet (333), un bord de coupe supérieur (342) formé le long d'une jonction de ladite surface de guidage de copeaux (341) et dudit flanc de filet supérieur (331), et un bord de coupe inférieur (343) formé le long d'une jonction de ladite surface de guidage de copeaux (341) et dudit flanc de filet inférieur (332).

2. - Vis (3) selon la revendication 1, dans laquelle lesdites premières sections de flanc supérieure et inférieure (334a, 334b) s'étendent sur une première longueur (334L), lesdites deuxièmes sections de flanc supérieure et inférieure (335a, 335b) s'étendant sur une deuxième longueur (335L), lesdites troisièmes sections de flanc supérieure et inférieure (336a, 336b) s'étendant sur une troisième longueur (336L), ladite première longueur (334L) étant égale à la fois à ladite deuxième longueur (335L) et à ladite troisième longueur (336L).

3. - Vis (3) selon la revendication 1 ou 2, dans laquelle une partie filetée auxiliaire (35) est disposée en spirale sur ladite tige (32).

4. - Vis (3) selon l'une quelconque des revendications 1 à 3, dans laquelle un fond de ladite surface de guidage de copeaux (341) est en contact avec lesdites deuxièmes sections de flanc supérieure et inférieure (335a, 335b).
